# EUROPEAN PATENT SPECIFICATION

(11) **EP 3 154 182 B1**
(45) Date of publication and mention of the grant of the patent: **31.07.2024**
(21) Application number: 14894405.1
(22) Date of filing: 09.06.2014
(51) Int. Cl.: H02P 23/00, H02P 23/20, H02P 27/06

(54) **POWER CONVERSION DEVICE**
STROMWANDLUNGSVORRICHTUNG
DISPOSITIF DE CONVERSION DE PUISSANCE

(43) Date of publication of application: 12.04.2017
(73) Proprietor: Hitachi Industrial Equipment Systems Co., Ltd., Tokyo 101-0022 (JP)
(72) Inventor: BABA Shigeyuki, Tokyo 101-0022 (JP); ARAO Yusuke, Tokyo 101-0022 (JP)
(74) Representative: Mewburn Ellis LLP
(86) International application number: PCT/JP2014/065173
(87) International publication number: WO 2015/189884

(56) References cited:
- JP-A- 2000 166 293
- JP-A- 2002 171 780
- JP-A- 2002 233 182
- JP-A- 2002 247 870
- JP-A- 2012 120 409
- JP-A- H09 140 181
- JP-A- H1 141 950
- JP-A- S56 129 596
- JP-A- S63 268 498
- JP-A- S63 268 498
- US-A1- 2007 216 340

## Description

### TECHNICAL FIELD

The present invention relates to a power conversion devices that drive and control an electric motor.

### BACKGROUND ART

A background art in this technical field is disclosed in JP-H06-42761 B2 . In this publication, there is described a control method for an electric vehicle control device that drives and controls an induction motor by a variable-voltage variable-frequency inverter. In controlling an output voltage / output frequency (hereinafter, referred to as a V/F characteristic) of the above-described inverter so as to maintain a set value in order to obtain constant acceleration and deceleration performance, the set value of the above-described V/F characteristic is made different between during powering time and during regeneration time, and the V/F characteristic during the regeneration time is set to a smaller value than the V/F characteristic during the powering time (see claims).

Another background art is disclosed in JP-H10-174491 A. In this publication, there is described that "an inverter that drives a motor based on a V/F characteristic, which is a ratio of an output voltage to an output frequency that have been stored, includes: a storage means that stores a plurality of motor circuit constants; means for setting at least one of a model, an output, and the number of poles of the motor to be used; an operating state setting means that sets an operating state such as accelerating, driving at a constant speed, and decelerating; and means for setting the V/F characteristic based on at least one of the model, the output, and the number of poles of the motor and the operating state." (see claims).

US2007/216340 discloses a method and an apparatus that aim to reduce a speed of an alternating current motor and to shorten a time period of reducing the speed without bringing about a failure by reducing the speed in an overexcited state by making a time constant of a first degree delay filter larger than a time constant in a normal control state, monitoring a current flowing in the alternating current motor and adjusting the time constant in accordance with a current flowing in the alternating current motor in reducing the speed in driving the alternating current motor by a voltage type inverter including a voltage correcting portion for correcting a given voltage instruction by using a value constituted by passing a direct current bus voltage detected value through the first degree delay filter. JPS63268498 discloses an acceleration-deceleration discrimination circuit that discriminates whether an induction motor is accelerating or decelerating. An acceleration V/F pattern generation circuit outputs the optimum V/F pattern for the acceleration of the motor. A deceleration. V/F pattern generation circuit outputs the optimum V/F pattern for the deceleration of the motor. By changing over a first changeover switch to a second changeover switch in accordance with the discriminating signal of the acceleration-deceleration discrimination circuit, the alternate current of the optimum voltage and frequency for the motor is outputted from a transistor inverter. JPH09140181 discloses an inverter in which a positive/negative discriminating circuit discriminates between powering state and regenerative state based on the polarity of torque current. At the time of regeneration, a switch circuit is closed to make a switching from a voltage setter providing an AVR level setting for powering to a voltage setter providing an AVR level setting for regeneration in order to increase the V/f ratio. Consequently, an induction motor is brought into over exciting state and a part of regenerative energy is absorbed by the induction motor itself. JPS56129596 discloses an AC motor controlling method wherein a star-delta selector switch, an adjuster of V/F (Voltage/ Frequency) ratio at AC motor terminals, and a V/F ratio selector switch are furnished. The star-delta selector switch changes the AC motor winding connection, selecting the star for a low speed running and the delta for a high speed running. The V/F selector switch selects command signals to alter the output voltage of the PWM inverter so that the V/F ratio may be smaller in the low speed range and larger in the high speed range. Thus, motor winding connection modification and V/F ratio variation effected together result in a greatly decreased line current, ensuring a continuous torque characteristic suiting given loads even in the low speed range. JPS56129596 discloses an AC motor controlling method wherein a star-delta selector switch, an adjuster of V/F (Voltage/ Frequency) ratio at AC motor terminals, and a V/F ratio selector switch are furnished. The star-delta selector switch changes the AC motor winding connection, selecting the star for a low speed running and the delta for a high speed running. The V/F selector switch selects command signals to alter the output voltage of the PWM inverter so that the V/F ratio may be smaller in the low speed range and larger in the high speed range. Thus, motor winding connection modification and V/F ratio variation effected together result in a greatly decreased line current, ensuring a continuous torque characteristic suiting given loads even in the low speed range. JP 2001 66293 A refers to a method for driving a synchronous motor, in order to reduce acceleration and deceleration time by individually setting the ratio pattern between power and frequency being outputted by a voltage-type inverter among acceleration operation, low-speed operation, and deceleration operation and switching the ratio pattern according to the change in an operation state.

### SUMMARY OF INVENTION

### TECHNICAL PROBLEM

In JP-H06-42761 B2, there is described a variable-voltage variable-frequency inverter having a system for increasing regeneration performance in a high speed range by setting the V/F characteristic during the regeneration time to a smaller value than the V/F characteristic during the powering time.

The method according to JP-H06-42761 B2, however, may not necessarily lead to an improvement of the regeneration performance. In the inverter, by setting the V/F characteristic during the regeneration time to a smaller value than the V/F characteristic during the powering time, electric motor loss becomes small, and regenerative torque may be reduced.

In JP-H10-174491 A, there is described an inverter, which drives a motor based on a V/F characteristic that has been stored, having a system for setting the V/F characteristic based on at least one of a model, output, and the number of poles of the motor and a setting of an operating state such as accelerating, driving at a constant speed, and decelerating.

The method according to JP-H10-174491 A, however, assumes a square reduced torque characteristic of a fan in general, and there is described a method for setting the V/F characteristic while decelerating by also using the square reduced characteristic. In the same way as in JP-H06-42761 B2, this may reduce the regenerative torque.

An objective of the present invention is to provide a power conversion device with which, while decelerating an electric motor, regenerative torque is secured in a high speed range and electric motor loss is reduced in a low speed range.

### SOLUTION TO PROBLEM

To solve the above-described problem, the subject matter of the independent claims is provided. The dependent claims describe optional embodiments of the invention.

### ADVANTAGEOUS EFFECTS OF INVENTION

According to the present invention, it is possible to provide a power conversion device in which both of an improvement of the regeneration performance and an improvement of electric motor efficiency are achieved.

Any problem, configuration, or effect other than the above-described one is clarified in the description of embodiments hereinafter.

### BRIEF DESCRIPTION OF DRAWINGS

[FIG. 1] FIG. 1 is a graph illustrating a V/F characteristic.
[FIG. 2] FIG. 2 is a graph illustrating an exemplary load torque during deceleration time.
[FIG. 3] FIG. 3 is a graph illustrating an exemplary regenerative torque characteristic.
[FIG. 4] FIG. 4 is an exemplary configuration diagram of a power conversion device according to a first example.
[FIG. 5] FIG. 5 is a graph illustrating stored content of an inverter device according to the first example.
[FIG. 6] FIG. 6 is a graph illustrating an exemplary relationship of a V/F characteristic according to the first example.
[FIG. 7] FIG. 7 is a graph illustrating an exemplary relationship of the V/F characteristic according to the first example.
[FIG. 8] FIG. 8 is a graph illustrating an exemplary relationship between an output voltage / time characteristic according to the first example.
[FIG. 9] FIG. 9 is a graph illustrating a stored content of an inverter device according to a second example.
[FIG. 10] FIG. 10 is a graph illustrating a stored content of an inverter device according to a third example.

### DESCRIPTION OF EMBODIMENTS

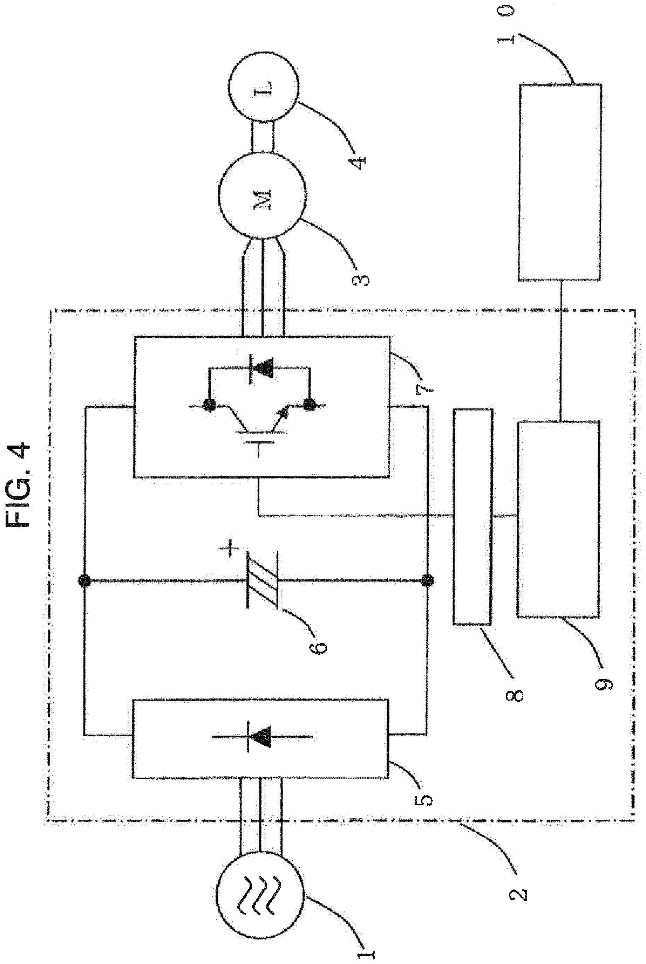

Hereinafter, examples are described by using the drawings. In FIG. 4, an exemplary control system including an inverter device according to the present invention is illustrated.

Power is supplied from a three-phase alternating-current (AC) power supply 1 to an inverter device 2, and an AC electric motor 3 is driven. To the AC electric motor 3, a load 4 used in a machine such as a fan and a conveyer is connected. Inside the inverter device 2, there are a converter unit 5, a smoothing capacitor 6, an inverter unit 7, a drive circuit 8, and a control circuit 9 constituted of a micro-computer and the like. The converter unit 5 converts an AC voltage supplied from the three-phase AC power supply or a power generator into a direct-current (DC) voltage. The DC voltage smoothed by the smoothing capacitor 6 is converted into an AC power by the inverter unit 7. The drive circuit 8 drives each switching element of the inverter unit 7 according to a drive control signal that is output from the control circuit 9. Information such as an output frequency, acceleration and deceleration time, and an operating state such as operating and stop can be set from an operator 10. An operating state signal within the inverter device is transmitted from the operator 10 to the control circuit 9.

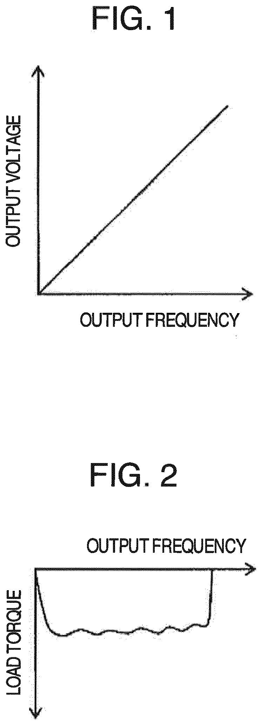

FIG. 1 is a view illustrating a relationship between an output voltage and an output frequency controlled by an inverter unit (V/F characteristic). This is the most basic V/F characteristic, and during powering time and the like, a ratio of the output voltage / output frequency is output to be constant.

In contrast, in the present invention, during regeneration time, the V/F characteristic is made different from the V/F characteristic during the powering time in driving. It is set such that a value of the V/F characteristic during the regeneration time is larger than a value thereof during the powering time in a region having a high output frequency and is smaller than the value thereof during the powering time in a region having a small output frequency.

During the regeneration time, in a case where the V/F characteristic is high while decelerating, it enters a so-called overexcited state in which an excitation current of an electric motor increases while electric motor loss increases. Due to an increase of the electric motor loss, regeneration energy is reduced, and the regenerative torque of an inverter is relatively increased.

On the other hand, in a case where the V/F characteristic during the regeneration time is a smaller value than the value thereof during the powering time, opposite to a state in which the V/F characteristic is high, the regenerative torque is reduced.

As described above, within a rated frequency of the electric motor, the regenerative torque may be increased rather by increasing the output voltage, or by setting the V/F characteristic to a larger value than the value thereof during the powering time. On the other hand, however, it is disadvantageous in terms of efficiency when the electric motor loss becomes too large. In a case of repeated operations, in all output frequencies, increasing the output voltage leads to a reduced efficiency and an increased risk of electric motor burning.

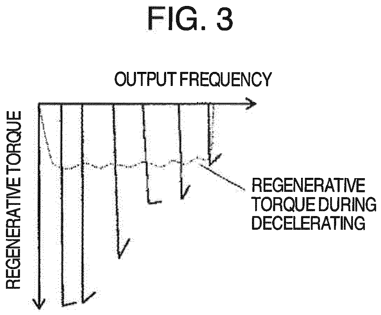

In FIG. 2, there is illustrated an exemplary load torque requested in a case where deceleration is performed by using the V/F characteristic of FIG. 1. In a case of an inertia load, although the load torque while decelerating is dependent on the length of deceleration time, substantially constant torque across the entire driving frequency is requested in many cases. On the other hand, in FIG. 3, an exemplary regenerative torque characteristic for each frequency while the inverter is driving is denoted by a solid line. The maximum regenerative torque is determined by a rated current of the inverter, a capacitor capacity of a smoothing capacitor, an overvoltage trip threshold, a characteristic of electric motor loss and the like, and it changes with frequency. In this example, the regenerative torque has a characteristic in which the torque is increased as it changes from a high speed to a low speed.

As it is clear from a comparison between the FIGS. 2 and 3, the load torque while decelerating is constant across the entire driving frequency, whereby the regenerative torque requested of the inverter is substantially determined by regeneration performance in the high speed range. Thus, high regenerative torque in the low speed range is not necessary. In view of this, by decreasing the output voltage in the low speed range, it is possible to suppress consumption current when passing the low speed range, whereby it is possible to drive efficiently. Note that there is a sufficient margin in the regenerative torque of the inverter relative to the load torque, whereby it is possible to obtain a desired torque even when the output voltage is decreased.

From the above-described reason, in the present invention, it is controlled such that the value of the V/F characteristic during the regeneration time is a larger value than the value thereof during the powering time in a high output frequency region and is smaller than the value thereof during the powering time in a small output frequency region.

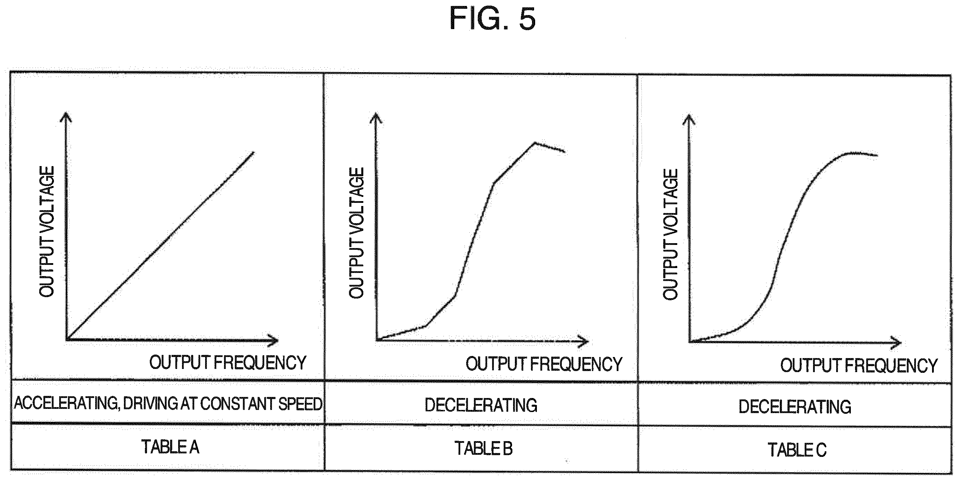

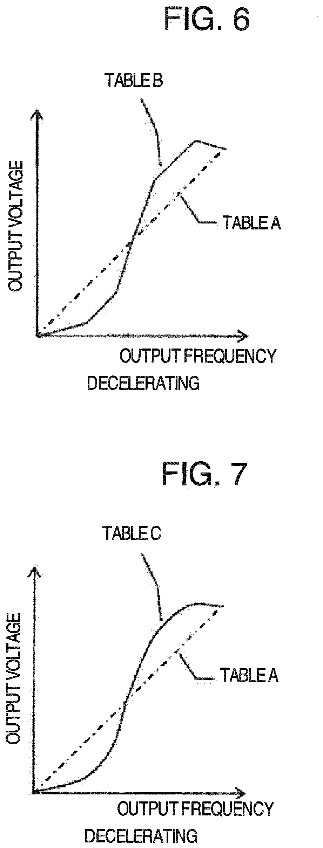

FIG. 5 is a graph illustrating the V/F characteristic of a first example. In table A, the V/F characteristic while accelerating and driving at a constant speed is set, and in tables B and C, the V/F characteristic while decelerating is set. In the table A, a ratio of the output voltage / output frequency is output in a fixed manner (predetermined value). As it is clear from FIGS. 6 and 7, in the tables B and C, a value of the V/F characteristic is set to be higher than the fixed value indicated in the table A in the high speed range (first frequency range) and is lower than the fixed value in the low speed range (second frequency range).

A storage area of the control circuit 9 is set such that a plurality of V/F characteristics and the operating state signal illustrated in FIG. 5 can be stored. Based on the operating state signal, the control circuit 9 selects the table A while accelerating and driving at driving at a constant speed and the table B or the table C while decelerating. Selection between the table B or the table C while decelerating may be set from the operator 10 in advance. Based on the operating state signal indicating the decelerating, accelerating, and driving at a constant speed and the V/F characteristic that has been stored, the control circuit 9 determines the output voltage for each output frequency. Accordingly, the electric motor is successively accelerated or decelerated according to the acceleration and deceleration time that has been set.

In the table B, the V/F line of the table A is shifted upward in a part of the high speed range and is shifted downward in a part of the low speed range, which are linked together. The table B is constituted of straight lines, whereby it has an advantage that it can be easily created on software and a width of shifting and a break point can be set.

On the other hand, the table C is the table B turned into a curved shape. It has an advantage that a possibility of causing an unstable phenomenon such as hunting is decreased by eliminating the part of the break point.

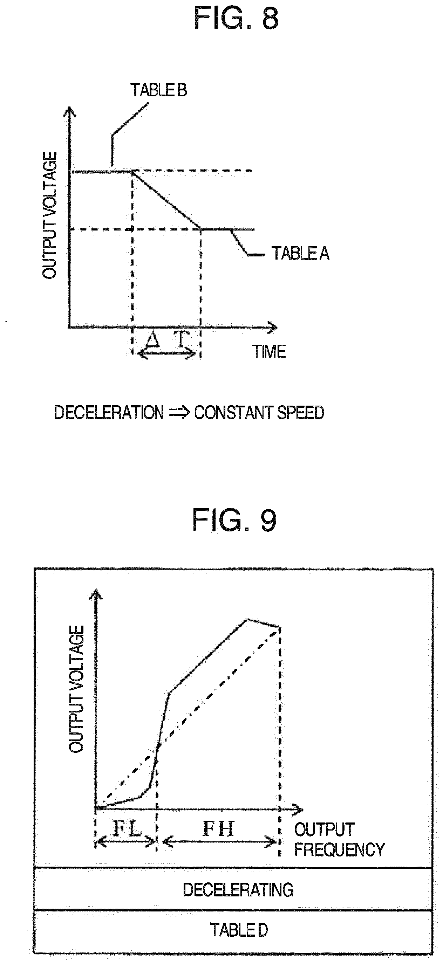

FIG. 8 is a view illustrating a time hysteresis when switching from a state in which the output voltage is increased while decelerating to driving at a constant speed (or accelerating). The control circuit 9 acquires operation information of accelerating, driving at a constant speed, and decelerating, and according to this information, performs control by changing the table of the output voltage / output frequency. In changing the output voltage accompanying a change of the table, it is switched gradually by using the time ΔT in FIG. 8. Accordingly, it is possible to drive while suppressing growth of an output current of the AC electric motor.

In addition, it is possible to make the time of switching from decelerating to driving at a constant speed or accelerating and the time of switching from driving at a constant speed or accelerating to decelerating different. During the switching from decelerating to driving at a constant speed or accelerating, the unstable phenomenon such as hunting may remain due to the switching. During the switching from driving at a constant speed or accelerating to decelerating, mainly, tripping may be easily caused unless it is quickly switched (and the unstable phenomenon such as the hunting may remain). Thus, it is preferred that a speed of the switching be adjusted in order to stabilize rotation as well as to avoid the tripping. For example, the time of the switching from driving at a constant speed or accelerating to decelerating may be made faster than the time of the switching from decelerating to driving at a constant speed or accelerating.

FIG. 9 is a view illustrating a V/F characteristic according to a second example.

A main difference is in that, the table A of FIG. 5 is set for the V/F characteristic while accelerating and driving at a constant speed, and a table D is set for the V/F characteristic while decelerating. The V/F characteristic of the table D is set to be high in the high speed range and to be low in the low speed range, which is the same; however, there is a difference in that a ratio of a high speed range frequency range FH (first frequency range) to a low speed range frequency range FL (second frequency range) is changed. The ratio of FH to FL may be set from the operator 10 in advance. Based on this, the control circuit 9 sets the table D and stores it in the storage area. FIG. 9 is a graph illustrating an FH > FL characteristic. In this case, regeneration energy is decreased due to electric motor loss, whereby regenerative torque is prioritized over motor efficiency. There is an effect that, as long as the regenerative torque is secured, overvoltage and overcurrent tripping is less likely to be caused. Also, with a FH < FL characteristic, the electric motor loss in the high speed range is suppressed, whereby it is possible to prioritize the motor efficiency.

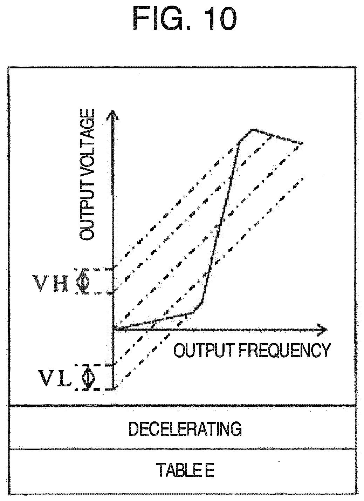

FIG. 10 is a graph illustrating a V/F characteristic of a third example.

A main difference is in that, the table A of FIG. 5 is set for the V/F characteristic while accelerating and driving at a constant speed, and a table E is set for the V/F characteristic while decelerating. The V/F characteristic of the table E is set to be high in the high speed range and to be low in the low speed range, which is the same; however, there is a difference in that a high speed range output voltage level VH and a low speed range output voltage level VL are changed. The VH and the VL may be set from the operator 10 in advance. Based on this, the control circuit 9 sets the table E and stores it in the storage area. In FIG. 10, the VH and VL are set to have positive values. With the table E, the overvoltage and overcurrent tripping is less likely to be caused in the first frequency range while the motor loss is more likely to be decreased in the second frequency range. By setting the VH and VL on a negative side, an opposite effect can be obtained. By making such setting, it is possible to perform control according to the load torque and the motor efficiency that are requested.

It is also possible to allow a user to set applicability of the present invention to the inverter device from the operator. For example, it is possible to set such that a table to be used during the regeneration time is selected by the user selecting the type of load from the operator. For example, in a case where the load is a load to be a target of the present invention such as a fan and the like, an appropriate table from among the table B to the table E may be set as the V/F characteristic during the regeneration time, and in a case where it is any other load, the same table used during the powering time may be used also during the regeneration time. It is also possible to set such that by the user selecting the type of load and the characteristic from the operator, the ratio of FL and FH in FIG. 9 as well as the values of the VH and VL in FIG. 10 are automatically selected. It is also possible to set such that the table is automatically selected by specifying a control priority item (regenerative torque priority, motor efficiency priority, and the like) in addition to the type of the load.

Note that the above-described examples use one type of the V/F characteristic during the powering time (accelerating and driving at a constant speed), which is the basic characteristic illustrated in FIG. 1; however, it is not necessarily to be limited to this, and a different V/F characteristic may also be used.

As above, in a power conversion device according to the present invention, it is possible to prevent the overvoltage and overcurrent tripping by increasing the regenerative torque by setting the V/F characteristic high in the high speed range while decelerating. In the low speed range, by setting the V/F characteristic low, it is possible to operate the electric motor repeatedly without burning, whereby it is effective in terms of efficiency as well.

### REFERENCE SIGNS LIST

- 1: Three-phase AC power supply
- 2: Inverter device
- 3: AC electric motor
- 4: Load
- 5: Converter unit
- 6: Smoothing capacitor
- 7: Inverter unit
- 8: Drive circuit
- 9: Control circuit
- 10: Operator

## Claims

1. A power conversion device (2) comprising:
a converter unit (5) configured to convert AC power being input into DC power;
a smoothing capacitor (6) configured to smooth the DC power converted by the converter unit (5);
an inverter unit (7) configured to convert the DC power smoothed by the smoothing capacitor (6) into AC power; and
a control unit (9) configured to control the inverter unit (7), wherein:
the control unit (9) is configured to control the inverter unit (7) such that a value of a ratio between the output voltage and the output frequency during regeneration time is larger than a value of a ratio between the output voltage and the output frequency during powering time in a first output frequency region;
wherein the control unit (9) is configured to store a plurality of characteristic data of the ratio between the output voltage and the output frequency, each of the plurality of characteristic data illustrating a relationship between the output voltage and the output frequency, and to control the inverter unit (7) based on different ones of the plurality of characteristic data between during the regeneration time and during the powering time;
wherein the control unit (9) is configured to control the inverter unit (7) by changing the characteristic data based on which the inverter unit (7) is being controlled to a different one of the plurality of characteristic data according to operation information while accelerating, driving at a constant speed, and decelerating, and a change of the characteristic data is performed gradually over a predetermined time; and
wherein the value of a ratio between the output voltage and the output frequency during powering time in the first output frequency region and in the second output frequency region is a predetermined value,
**characterized in that**:
the control unit (9) is configured to control the inverter unit (7) such that the value of the ratio between the output voltage and the output frequency during regeneration time is smaller than a value of a ratio between the output voltage and the output frequency during the powering time in a second output frequency region having smaller frequencies than in the first output frequency region.

2. The power conversion device (2) according to claim 1, wherein
the time used for changing the characteristic data is different between when switching from driving at a constant speed or accelerating to decelerating and when switching from decelerating to driving at a constant speed or accelerating.

3. The power conversion device (2) according to claim 1, wherein
the control unit (9) is configured to control the inverter unit (7) by changing a ratio of size of the first region and the second region.

4. The power conversion device (2) according to claim 1, wherein
the control unit (9) is configured to control the inverter unit (7) by individually changing the output voltage in the first region and the output voltage in the second region.

5. The power conversion device (2) according to claim 1, wherein
the characteristic data based on which the inverter unit (7) is controlled during the regeneration time is selected from among a plurality of characteristic data by a user of the power conversion device (2).

6. The power conversion device (2) according to claim 1, further comprising:
an operator (10) configured to allow a user to perform operation of the power conversion device (2), wherein
the operator (10) is capable of selecting a load type or a control priority item to be a control target, and
the control unit (9) performs control of the inverter unit (7) by using the characteristic data corresponding to the load type or the control priority item selected from the operator (10).

7. A power conversion device (2), comprising:
a converter unit (5) configured to convert AC power being input into DC power;
a smoothing capacitor (6) configured to smooth the DC power converted by the converter unit (5);
an inverter unit (7) configured to convert the DC power smoothed by the smoothing capacitor (6) into AC power; and
a control unit (9) configured to control the inverter unit (7), wherein:
the control unit (9) is configured to control the inverter unit (7) such that a value of a ratio between the output voltage and the output frequency during regeneration time is larger than a predetermined value in a first output frequency region in which the output frequencies are larger than a predetermined frequency;
wherein the control unit (9) is configured to store a plurality of characteristic data of the ratio between the output voltage and the output frequency, each of the plurality of characteristic data illustrating a relationship between the output voltage and the output frequency, and to control the inverter unit (7) based on different ones of the plurality of characteristic data between during the regeneration time and during the powering time; and
wherein the control unit (9) is configured to control the inverter unit (7) by changing the characteristic data based on which the inverter unit (7) is being controlled to a different once of the plurality of characteristic data according to operation information while accelerating, driving at a constant speed, and decelerating, and a change of the characteristic data is performed gradually over a predetermined time;
**characterized in that**:
the control unit (9) is configured to control the inverter unit (7) such that the value of the ratio between the output voltage and the output frequency during regeneration time is smaller than the predetermined value in a second output frequency region in which the output frequencies are smaller than the predetermined frequency.

8. The power conversion device (2) according to claim 7, wherein
the predetermined frequency can be changed by setting.

9. The power conversion device (2) according to claim 7, further comprising:
an operator (10) configured to allow a user to perform operation of the power conversion device (2), wherein
the operator (10) is capable of selecting a load type or a control priority item to be a control target, and
the control unit (9) is configured to perform control of the inverter unit (7) by using the characteristic data corresponding to the load type or the control priority item selected from the operator (10).

## Patentansprüche

1. Leistungswandlervorrichtung (2), die Folgendes umfasst:
eine Wandlereinheit (5), die dazu ausgelegt ist, aufgenommene Wechselstromleistung in Gleichstromleistung umzuwandeln;
einen Glättungskondensator (6), der dazu ausgelegt ist, die durch die Wandlereinheit (5) umgewandelte Gleichstromleistung zu glätten;
eine Wechselrichtereinheit (7), die dazu ausgelegt ist, die durch den Glättungskondensator (6) geglättete Gleichstromleistung in Wechselstromleistung umzuwandeln; und
eine Steuereinheit (9), die dazu ausgelegt ist, die Wechselrichtereinheit (7) zu steuern,
wobei die Steuereinheit (9) dazu ausgelegt ist, die Wechselrichtereinheit (7) so zu steuern, dass in einem ersten Ausgangsfrequenzbereich ein Wert eines Verhältnisses zwischen der Ausgangsspannung und der Ausgangsfrequenz während einer Regenerationszeit größer ist als ein Wert eines Verhältnisses zwischen der Ausgangsspannung und der Ausgangsfrequenz während einer Antriebszeit;
wobei die Steuereinheit (9) dazu ausgelegt ist, eine Vielzahl von charakteristischen Daten über das Verhältnis zwischen der Ausgangsspannung und der Ausgangsfrequenz zu speichern, wobei jede aus der Vielzahl von charakteristischen Daten eine Beziehung zwischen der Ausgangsspannung und der Ausgangsfrequenz darstellt, und die Wechselrichtereinheit (7) basierend auf unterschiedlichen aus der Vielzahl von charakteristischen Daten zwischen während der Regenerationszeit und während der Antriebszeit zu steuern;
wobei die Steuereinheit (9) dazu ausgelegt ist, die Wechselrichtereinheit (7) zu steuern, indem sie die charakteristischen Daten, auf denen beruhend die Wechselrichtereinheit (7) gesteuert wird, auf eine andere aus der Vielzahl von charakteristischen Daten gemäß Betriebsinformationen ändert, während beschleunigt, bei konstanter Geschwindigkeit gefahren und verlangsamt wird, und eine Änderung der charakteristischen Daten allmählich über einen vorbestimmten Zeitraum hinweg durchgeführt wird; und
wobei der Wert des Verhältnisses zwischen der Ausgangsspannung und der Ausgangsfrequenz während der Antriebszeit im ersten Ausgangsfrequenzbereich und im zweiten Ausgangsfrequenzbereich ein vorbestimmter Wert ist,
**dadurch gekennzeichnet, dass**
die Steuereinheit (9) dazu ausgelegt ist, die Wechselrichtereinheit (7) so zu steuern, dass der Wert des Verhältnisses zwischen der Ausgangsspannung und der Ausgangsfrequenz während der Regenerationszeit kleiner ist als ein Wert eines Verhältnisses zwischen der Ausgangsspannung und der Ausgangsfrequenz während der Antriebszeit in einem zweiten Ausgangsfrequenzbereich, der kleinere Frequenzen als im ersten Ausgangsfrequenzbereich aufweist.

2. Leistungswandlervorrichtung (2) nach Anspruch 1, wobei die Zeit, die zur Änderung der charakteristischen Daten benötigt wird, je nachdem, ob von Fahren bei konstanter Geschwindigkeit oder von Beschleunigen auf Verlangsamen geschaltet wird oder ob von Verlangsamen zu Fahren bei konstanter Geschwindigkeit oder Beschleunigen, unterschiedlich ist.

3. Leistungswandlervorrichtung (2) nach Anspruch 1, wobei die Steuereinheit (9) dazu ausgelegt ist, die Wechselrichtereinheit (7) durch Ändern eines Verhältnisses der Größe des ersten Bereichs und des zweiten Bereichs zu steuern.

4. Leistungswandlervorrichtung (2) nach Anspruch 1, wobei die Steuereinheit (9) dazu ausgelegt ist, die Wechselrichtereinheit (7) durch individuelles Ändern der Ausgangsspannung im ersten Bereich und der Ausgangsspannung im zweiten Bereich zu steuern.

5. Leistungswandlervorrichtung (2) nach Anspruch 1, wobei die charakteristischen Daten, auf denen beruhend die Wechselrichtereinheit (7) während der Regenerationszeit gesteuert wird, durch einen Benutzer der Leistungswandlervorrichtung (2) aus einer Vielzahl von charakteristischen Daten ausgewählt werden.

6. Leistungswandlervorrichtung (2) nach Anspruch 1, ferner umfassend:
eine Betriebseinheit (10), die dazu ausgelegt ist, es einem Benutzer zu ermöglichen, den Betrieb der Leistungswandlervorrichtung (2) durchzuführen, wobei
die Betriebseinheit (10) in der Lage ist, einen Lasttyp oder ein Steuerprioritätselement als Steuerziel auszuwählen, und
die Steuereinheit (9) durch Verwenden der charakteristischen Daten, die dem von der Betriebseinheit (10) ausgewählten Lasttyp oder Steuerprioritätselement entsprechen, die Steuerung der Wechselrichtereinheit (7) durchführt.

7. Leistungswandlervorrichtung (2), die Folgendes umfasst:
eine Wandlereinheit (5), die dazu ausgelegt ist, aufgenommene Wechselstromleistung in Gleichstromleistung umzuwandeln;
einen Glättungskondensator (6), der dazu ausgelegt ist, die durch die Wandlereinheit (5) umgewandelte Gleichstromleistung zu glätten;
eine Wechselrichtereinheit (7), die dazu ausgelegt ist, die durch den Glättungskondensator (6) geglättete Gleichstromleistung in Wechselstromleistung umzuwandeln; und
eine Steuereinheit (9), die dazu ausgelegt ist, die Wechselrichtereinheit (7) zu steuern,
wobei die Steuereinheit (9) dazu ausgelegt ist, die Wechselrichtereinheit (7) so zu steuern, dass ein Wert eines Verhältnisses zwischen der Ausgangsspannung und der Ausgangsfrequenz während einer Regenerationszeit größer ist als ein vorbestimmter Wert in einem ersten Ausgangsfrequenzbereich, in dem die Ausgangsfrequenzen größer sind als eine vorbestimmte Frequenz;
wobei die Steuereinheit (9) dazu ausgelegt ist, eine Vielzahl von charakteristischen Daten über das Verhältnis zwischen der Ausgangsspannung und der Ausgangsfrequenz zu speichern, wobei jede aus der Vielzahl von charakteristischen Daten eine Beziehung zwischen der Ausgangsspannung und der Ausgangsfrequenz darstellt, und die Wechselrichtereinheit (7) basierend auf unterschiedlichen aus der Vielzahl von charakteristischen Daten zwischen während der Regenerationszeit und während der Antriebszeit zu steuern;
wobei die Steuereinheit (9) dazu ausgelegt ist, die Wechselrichtereinheit (7) zu steuern, indem sie die charakteristischen Daten, auf denen beruhend die Wechselrichtereinheit (7) gesteuert wird, auf eine andere aus der Vielzahl von charakteristischen Daten gemäß Betriebsinformationen ändert, während beschleunigt, bei konstanter Geschwindigkeit gefahren und verlangsamt wird, und eine Änderung der charakteristischen Daten allmählich über einen vorbestimmten Zeitraum erfolgt;
**dadurch gekennzeichnet, dass**
die Steuereinheit (9) dazu ausgelegt ist, die Wechselrichtereinheit (7) so zu steuern, dass der Wert des Verhältnisses zwischen der Ausgangsspannung und der Ausgangsfrequenz während der Regenerationszeit kleiner ist als der vorbestimmte Wert in einem zweiten Ausgangsfrequenzbereich, in dem die Ausgangsfrequenzen kleiner sind als die vorbestimmte Frequenz.

8. Leistungswandlervorrichtung (2) nach Anspruch 7, wobei die vorbestimmte Frequenz durch Einstellen geändert werden kann.

9. Leistungswandlervorrichtung (2) nach Anspruch 7, ferner Folgendes umfassend:
eine Betriebseinheit (10), die dazu ausgelegt ist, es einem Benutzer zu ermöglichen, den Betrieb der Leistungswandlervorrichtung (2) durchzuführen, wobei
die Betriebseinheit (10) in der Lage ist, einen Lasttyp oder ein Steuerprioritätselement als Steuerziel auszuwählen, und
die Steuereinheit (9) ausgelegt ist, durch Verwenden der charakteristischen Daten, die dem von der Betriebseinheit (10) ausgewählten Lasttyp oder Steuerprioritätselement entsprechen, die Steuerung der Wechselrichtereinheit (7) durchzuführen.

## Revendications

1. Dispositif de conversion de puissance (2), comprenant :
une unité de conversion (5) configurée pour convertir de la puissance alternative, CA, entrée en puissance continue, CC ;
un condensateur de lissage (6) configuré pour lisser la puissance CC convertie par l'unité de conversion (5) ;
une unité d'onduleur (7) configurée pour convertir la puissance CC lissée par le condensateur de lissage (6) en puissance CA ; et
une unité de commande (9) configurée pour commander l'unité d'onduleur (7), dans lequel :
l'unité de commande (9) est configurée pour commander l'unité d'onduleur (7) de telle sorte qu'une valeur d'un rapport entre la tension de sortie et la fréquence de sortie pendant le temps de régénération est supérieure à une valeur d'un rapport entre la tension de sortie et la fréquence de sortie pendant le temps d'alimentation dans une première région de fréquence de sortie ;
dans lequel l'unité de commande (9) est configurée pour stocker une pluralité de données caractéristiques du rapport entre la tension de sortie et la fréquence de sortie, chacune de la pluralité de données caractéristiques illustrant une relation entre la tension de sortie et la fréquence de sortie, et pour commander l'unité d'onduleur (7) sur la base de données différentes de la pluralité de données caractéristiques entre pendant le temps de régénération et pendant le temps d'alimentation ;
dans lequel l'unité de commande (9) est configurée pour commander l'unité d'onduleur (7) en changeant les données caractéristiques sur la base desquelles l'unité d'onduleur (7) est commandée en une différente de la pluralité de données caractéristiques selon les informations de fonctionnement tout en accélérant, en conduisant à une vitesse constante et en décélérant, et un changement des données caractéristiques est effectué progressivement sur une période prédéterminée ; et
dans lequel la valeur d'un rapport entre la tension de sortie et la fréquence de sortie pendant le temps d'alimentation dans la première région de fréquence de sortie et dans la seconde région de fréquence de sortie est une valeur prédéterminée,
**caractérisé en ce que** :
l'unité de commande (9) est configurée pour commander l'unité d'onduleur (7) de telle sorte que la valeur du rapport entre la tension de sortie et la fréquence de sortie pendant le temps de régénération est inférieure à une valeur d'un rapport entre la tension de sortie et la fréquence de sortie pendant le temps d'alimentation dans une seconde région de fréquence de sortie ayant des fréquences plus petites que dans la première région de fréquence de sortie.

2. Dispositif de conversion de puissance (2) selon la revendication 1, dans lequel
le temps utilisé pour changer les données caractéristiques est différent lors du passage d'une conduite à une vitesse constante ou d'une accélération à une décélération et lors du passage d'une décélération à une conduite à une vitesse constante ou à une accélération.

3. Dispositif de conversion de puissance (2) selon la revendication 1, dans lequel
l'unité de commande (9) est configurée pour commander l'unité d'onduleur (7) en changeant un rapport de taille de la première région et de la seconde région.

4. Dispositif de conversion de puissance (2) selon la revendication 1, dans lequel
l'unité de commande (9) est configurée pour commander l'unité d'onduleur (7) en changeant individuellement la tension de sortie dans la première région et la tension de sortie dans la seconde région.

5. Dispositif de conversion de puissance (2) selon la revendication 1, dans lequel
les données caractéristiques sur la base desquelles l'unité d'onduleur (7) est commandée pendant le temps de régénération sont sélectionnées parmi une pluralité de données caractéristiques par un utilisateur du dispositif de conversion de puissance (2).

6. Dispositif de conversion de puissance (2) selon la revendication 1, comprenant en outre :
un opérateur (10) configuré pour permettre à un utilisateur d'exécuter un fonctionnement du dispositif de conversion de puissance (2), dans lequel
l'opérateur (10) est capable de sélectionner un type de charge ou un élément de priorité de commande pour être une cible de commande, et
l'unité de commande (9) exécute la commande de l'unité d'onduleur (7) en utilisant les données caractéristiques correspondant au type de charge ou à l'élément de priorité de commande sélectionné par l'opérateur (10).

7. Dispositif de conversion de puissance (2), comprenant :
une unité de conversion (5) configurée pour convertir de la puissance alternative, CA, entrée en puissance continue, CC ;
un condensateur de lissage (6) configuré pour lisser la puissance CC convertie par l'unité de conversion (5) ;
une unité d'onduleur (7) configurée pour convertir la puissance CC lissée par le condensateur de lissage (6) en puissance CA ; et
une unité de commande (9) configurée pour commander l'unité d'onduleur (7), dans lequel :
l'unité de commande (9) est configurée pour commander l'unité d'onduleur (7) de telle sorte qu'une valeur d'un rapport entre la tension de sortie et la fréquence de sortie pendant le temps de régénération est supérieure à une valeur prédéterminée dans une première région de fréquence de sortie dans laquelle les fréquences de sortie sont supérieures à une fréquence prédéterminée ;
dans lequel l'unité de commande (9) est configurée pour stocker une pluralité de données caractéristiques du rapport entre la tension de sortie et la fréquence de sortie, chacune de la pluralité de données caractéristiques illustrant une relation entre la tension de sortie et la fréquence de sortie, et pour commander l'unité d'onduleur (7) sur la base de données différentes de la pluralité de données caractéristiques entre pendant le temps de régénération et pendant le temps d'alimentation ; et
dans lequel l'unité de commande (9) est configurée pour commander l'unité d'onduleur (7) en modifiant les données caractéristiques sur la base desquelles l'unité d'onduleur (7) est commandée en une différente de la pluralité de données caractéristiques selon les informations de fonctionnement tout en accélérant, en conduisant à une vitesse constante et en décélérant, et un changement des données caractéristiques est effectué progressivement sur une période prédéterminée ;
**caractérisé en ce que** :
l'unité de commande (9) est configurée pour commander l'unité d'onduleur (7) de telle sorte que la valeur d'un rapport entre la tension de sortie et la fréquence de sortie pendant le temps de régénération est inférieure à la valeur prédéterminée dans une seconde région de fréquence de sortie dans laquelle les fréquences de sortie sont inférieures à la fréquence prédéterminée.

8. Dispositif de conversion de puissance (2) selon la revendication 7, dans lequel la fréquence prédéterminée peut être changée par réglage.

9. Dispositif de conversion de puissance (2) selon la revendication 7 comprenant en outre : un opérateur (10) configuré pour permettre à un utilisateur d'exécuter le fonctionnement du dispositif de conversion de puissance (2), dans lequel
l'opérateur (10) est capable de sélectionner un type de charge ou un élément de priorité de commande pour être une cible de commande, et
l'unité de commande (9) est configurer pour exécuter la commande de l'unité d'onduleur (7) en utilisant les données caractéristiques correspondant au type de charge ou à l'élément de priorité de commande sélectionné à partir de l'opérateur (10).
